# EUROPEAN PATENT APPLICATION

(11) **EP 2 098 829 A1**
(43) Date of publication of application: **09.09.2009**
(21) Application number: 08300130.5
(22) Date of filing: 03.03.2008
(51) Int. Cl.: G01D 5/249

(54) **Absolute encoder and electric drive**

(71) Applicant: Alcatel Lucent, 75008 Paris (FR)
(72) Inventor: PFENDLER, Klaus, 79848, Bonndorf (DE)
(74) Representative: Brose, Gerhard

(57) **Abstract**

The invention relates to an absolute encoder (AE) with an absolute sensor (AS), for unambiguously detecting and non-volatilaly holding a position, being the result of turning an axle within a predetermined finite multiple of turns, in which the absolute encoder (AE) includes a gear such (G) that the predetermined finite multiple of turns is reproduced onto the measuring range of the absolute sensor (AS) in a one-to-one manner, and to an electric drive with such absolute encoder.

## Description

The invention relates to an absolute encoder according to the preamble of claim 1 and to an electric drive with such an encoder.

There are lots of applications where a device is to be positioned between two predetermined end positions. This sometimes is done by a winder or more often by an electric motor. Then this positioning is a turning of an axle within a predetermined finite multiple of turns. For sensing the absolute position of such device it is known to use counters, which count the turns of this axle and sometimes directly translate the counter reading into the absolute position.

Venetian blinds are examples of such devices.

Mechanical counters cannot be used in electric control circuits, whereas electrical counters normally loose their counter reading when not in use.

It is an object of the invention to find a solution for unambiguously detecting and non-volatilaly holding a position in an absolute encoder of the above-mentioned kind.

This object is achieved according to the invention with an absolute encoder according to the teaching of claim 1 and with an electric drive according to the teaching of claim 5.

With this a mapping of the range between the two predetermined end positions and the sensing range of a sensor is reached so that an unambiguously detecting and non-volatilaly holding of the actual position is reached easily. This mapping is a one-to-one mapping in the sense that on the one hand each position within the range between the two predetermined end positions is mapped unambiguously onto one point within the sensing range of the sensor and on the other hand each position within the sensing range of the sensor is unambiguously representing one point within the range between the two predetermined end positions.

Further embodiments of the invention are to be found in the subclaims and the following description.

In the following the invention will be described with the aid of the accompanying drawing:

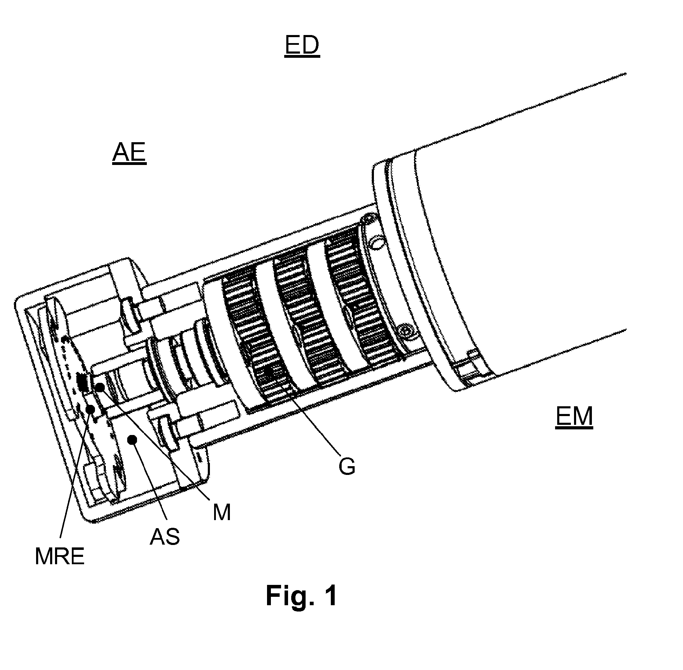

- Figure 1: shows an electric drive according to the invention in a three dimensional view with a part of the casing removed.

The electric drive ED in figure 1 includes an absolute encoder AE and an electric motor EM.

The electric drive ED may further include transmission means like a gear for driving a device to be positioned.

The electric motor EM is shown only in part. The end with the output shaft for driving a device is not to be seen.

The absolute encoder AE includes a gear G and an absolute sensor AS. The absolute sensor AS in this example consists of a magnetic rotary encoder MRE as a fixed part and a magnet M as a rotating part. Such magnetic rotary encoders are easily available on the market, for example with a digital output with a resolution of 8 bits. This covers full 360°.

The absolute encoder AE is positioned opposite to the output shaft of the electric motor EM. Of course such absolute encoder AE may be manufactured and traded independent from the motor for which it is foreseen. But assembling of an absolute sensor AS together with a gear G and an electric motor EM is often done with the manufacturer of the electric motor.

It will be assembled together with the electric motor EM either with the manufacturer of the motor or even only when assembling the encoder with the motor and the device to be driven.

The gear G is attached to an axle of the motor that at the other end ends as the output shaft. As mostly at the output shaft of a motor a gear is acting, the gear G of the absolute encoder AE reverses said gear's acting and moreover overcompensates this in a way that also the effect of further transmission means between said gear and the device to be positioned is regarded. Due to this reversing effect the clearance in the gears is compensated for to a great extend.

Magnetic sensors of the described design are free from wear and therefor are first choice.

But as potentiometers are more readily accessible, they could be used similarly. The reduced coverage of approximately 270° is to be taken into account.

Also n-turn-potentiometers, also called spindle-potentiometers could be used, then extending the range to n times 360°. But such potentiometers, at least the widespread ones, are not foreseen for regular use, but only for one-time adjustments.

## Claims

1. Absolute encoder (AE) with an absolute sensor (AS), for unambiguously detecting and non-volatilaly holding a position, being the result of turning an axle within a predetermined finite multiple of turns, **characterized in, that** the absolute encoder (AE) includes a gear such (G) that the predetermined finite multiple of turns is reproduced onto the measuring range of the absolute sensor (AS) in a one-to-one manner.

2. Absolute encoder (AE) according to claim 1, **characterized in, that** the absolute sensor (AS) is a potentiometer, and that the gear (G) reduces the predetermined finite multiple of turns to approximately 270 degrees.

3. Absolute encoder (AE) according to claim 1, **characterized in, that** the absolute sensor (AS) is an n-turn-potentiometer, and that the gear (G) reduces the predetermined finite multiple of turns to n turns.

4. Absolute encoder (AE) according to claim 1, **characterized in, that** the absolute sensor (AS) is a magnet sensor (MRE), and that the gear reduces the predetermined finite multiple of turns to one turn.

5. Electric drive (ED) with an electric motor (EM) and an absolute encoder (AE) according to claim 1.
